# FASCICULE DE BREVET EUROPEEN

(11) **EP 2 049 392 B1**
(45) Date de publication et mention de la délivrance du brevet: **06.10.2010**
(21) Numéro de dépôt: 07823416.8
(22) Date de dépôt: 10.08.2007
(51) Int. Cl.: B64D 11/06

(54) **SOUS-ENSEMBLE D'AERONEF ET AERONEF COMPORTANT UN TEL SOUS-ENSEMBLE**
FLUGZEUGBAUGRUPPE UND MIT EINER SOLCHEN BAUGRUPPE AUSGESTATTETES FLUGZEUG
AIRCRAFT SUB-ASSEMBLY AND AIRCRAFT PROVIDED WITH SUCH A SUB-ASSEMBLY

(30) Priorité: 10.08.2006 FR 0607254; 11.10.2006 US 850635 P
(43) Date de publication de la demande: 22.04.2009
(73) Titulaire: Airbus Société par Actions Simplifiées, 31700 Blagnac (FR)
(72) Inventeur: BOCK, Thomas-Mathias, F-31330 Grenade-sur-Garonne (FR)
(74) Mandataire: Petit, Maxime
(86) Numéro de dépôt international: PCT/FR2007/001364
(87) Numéro de publication internationale: WO 2008/017763

(56) Documents cités:
- EP-A- 1 571 037
- WO-A-2004/083035
- DE-A1-102004 063 094
- US-A1- 5 954 401
- US-A1- 2006 086 864

## Description

L'invention est relative à un sous-ensemble d'aéronef qui comporte un siège et une assise pour passager d'aéronef.

Sur les vols commerciaux d'aéronefs, particulièrement dans les classes dites supérieures (premières classes, classes "affaires"...), les passagers font l'objet d'attentions particulières de la part des constructeurs d'aéronefs.

Ces derniers prévoient notamment plus d'espace que pour les passagers des classes dites "économiques" et, de façon générale, offrent de plus en plus de services pour améliorer le confort des passagers.

Les passagers des classes supérieures peuvent ainsi incliner leur siège dans une position sensiblement horizontale, parfois même transformer leur fauteuil en lit car les sièges placés devant et derrière sont suffisamment éloignés.

Les sièges sont également écartés latéralement les uns des autres pour offrir plus d'espace aux passagers.

Cependant, malgré tout le soin apporté à l'aménagement de l'espace de vie des passagers de ces classes supérieures, ces passagers éprouvent parfois le besoin de disposer de plus d'intimité à l'égard des autres passagers qui sont bien souvent des inconnus.

Pour satisfaire un tel besoin, ils sont obligés de se rendre aux toilettes ou dans un autre endroit de l'aéronef, tel qu'un local spécialement aménagé pour s'isoler des autres passagers.

Un tel local spécifique réduit toutefois l'espace disponible pour implanter des sièges passagers.

Par ailleurs, les passagers recherchent également une certaine intimité lorsqu'ils souhaitent s'allonger pour dormir et dans ce but le document US 2006/0086864, qui montre toutes les caractéristiques du préambule de la revendication 1, propose l'utilisation d'un panneau séparateur.

La présente invention vise à remédier à au moins un des inconvénients précités en proposant un sous-ensemble d'aéronef conforme à la revendication 1.

Un tel sous-ensemble offre plus d'intimité aux passagers que l'éloignement des autres sièges qui est somme toute limitée.

Le panneau séparateur peut, en effet, masquer le passager occupant le siège du sous-ensemble aux yeux d'autres passagers occupant d'autres sièges de la cabine d'aéronef dans laquelle le sous-ensemble est agencé.

Ainsi, le passager installé dans le sous-ensemble selon l'invention n'a pas besoin de se lever de son siège pour être à l'abri des regards.

Le positionnement du panneau séparateur incurvé le long du siège passager, sans dépasser l'avant du siège, n'empiète pas sur l'espace situé devant le siège ni sur l'espace avant situé en oblique par rapport au siège.

De ce fait, l'adjonction du panneau séparateur a côté du siège ne restreint pas l'espace libre autour du siège pour y accéder.

Par ailleurs, le panneau ne fait que séparer physiquement le siège passager des autres sièges passagers sans pour autant renfermer le siège passager à l'intérieur d'un module.

Un tel module aurait pour effet d'isoler complètement le passager du reste de la cabine et, par là même, lui donnerait l'impression d'être enfermé et donc de disposer de moins d'espace libre.

Grâce à l'invention, le passager n'a pas cette impression d'enfermement.

En outre, installer des modules autour des sièges passagers aurait pour effet de réduire de façon générale, l'espace libre dans toute la cabine de l'aéronef où seraient implantés ces modules. Les passagers circulant dans la cabine ressentiraient donc une impression générale désagréable de confinement.

En outre, la conception des installations de ventilation de la cabine devrait être revue car les parois constituant les modules perturberaient les écoulements d'air issus des installations conventionnelles.

Disposer un panneau séparateur de façon adjacente à un siège passager est une solution simple dont la mise en oeuvre ne nécessite pas d'aménagements incidents, ni de réservation de locaux spécifiques dans l'avion à cette fin.

De plus, l'ajout d'un panneau n'augmente pas de façon inconsidérée la charge de l'aéronef.

A cet égard, on peut notamment utiliser des matériaux légers tels qu'une structure alvéolaire (nid d'abeilles).

La courbure transversale contribue à augmenter la rigidité du panneau. Cette courbure confère également au panneau une plus grande stabilité qu'un panneau droit lorsqu'il est aménagé sur le plancher de la cabine d'un aéronef.

Ceci s'avère utile lorsqu'un passager qui est debout dans une allée et discute avec un autre passager assis prend appui sur le panneau, notamment sur la partie du panneau longeant le siège.

On notera que le panneau courbe selon l'invention peut être disposé le long d'un des deux côtés opposés d'un siège isolé ou être agencé le long d'un des deux côtés opposés d'un ensemble siège-assise dans lequel l'assise est placée derrière le siège.

Selon une caractéristique, la courbure transversale s'étend suivant toute la hauteur du panneau.

Selon une caractéristique, la courbure a une concavité qui est dirigée vers ledit au moins un siège.

De ce fait, la partie convexe du panneau est tournée vers l'extérieur du sous-ensemble, ce qui permet de faciliter le déplacement des personnes circulant dans la cabine et passant le long du panneau, ainsi que des chariots et bagages.

Le risque de blessures de ces personnes au contact du panneau qui offre, vis-à-vis de l'extérieur, une surface lisse et bombée, est en outre réduit.

En outre, la concavité orientée vers le siège offre plus d'espace libre latéral au passager assis qu'un panneau droit.

La courbure transversale du panneau est définie par la variation de l'orientation géométrique d'un vecteur tangent à la face externe du panneau et qui se déplace sur cette face entre l'extrémité dite avant du panneau, située au niveau de l'avant du siège, et l'extrémité dite arrière du panneau, située au moins au niveau du dossier du siège, voire au-delà lorsqu'une assise est placée derrière le siège.

Selon une caractéristique, au moins un des côtés opposés du siège le long duquel est disposé le panneau est également incurvé et les courbures du panneau et du siège sont adaptées l'une à l'autre, par exemple identiques ou au moins similaires.

Selon une caractéristique, le panneau séparateur est en forme générale de tuile.

Selon une caractéristique, le panneau séparateur comporte, à sa partie inférieure, un socle destiné à être fixé au plancher d'une cabine d'aéronef.

Ce socle permet d'assurer facilement la fixation du panneau et contribue également à accroître la rigidité et la stabilité du panneau.

Selon une caractéristique, le panneau séparateur présente, à sa partie supérieure, une courbure convexe, en projection dans un plan contenant les directions longitudinale et verticale d'extension du panneau.

Une telle forme permet, d'une part, de réduire les risques de blessure par rapport à un bord supérieur rectiligne avec des angles vifs et, d'autre part, de dégager l'espace de vision latéral du passager assis.

Selon une caractéristique, le sous-ensemble d'aéronef comporte, en outre, une assise disposée derrière le siège du passager, alignée suivant la direction longitudinale d'extension du panneau séparateur, ledit panneau séparateur s'étendant également suivant cette direction, le long d'un des deux côtés de l'assise.

Selon une caractéristique, le panneau séparateur forme un retour derrière le siège passager ou l'assise dans une direction sensiblement perpendiculaire à la direction longitudinale.

Selon une caractéristique, le panneau séparateur s'étend depuis l'un des deux côtés opposés du siège passager jusqu'à l'autre côté en passant derrière ledit siège.

Selon une caractéristique, le sous-ensemble d'aéronef comporte deux sièges de passager disposés parallèlement l'un à l'autre, le panneau séparateur s'étendant depuis l'un des deux côtés opposés du premier siège jusqu'à l'un des deux côtés opposés du second siège en passant derrière les deux sièges, de manière à former une sorte d'alcôve ouverte sur le devant des dits sièges.

L'invention a également pour objet un aéronef comportant au moins un sous-ensemble d'aéronef conforme au sous-ensemble brièvement exposé ci-dessus et qui est agencé sur un plancher d'une cabine de l'aéronef.

Selon une caractéristique, ledit au moins un sous-ensemble d'aéronef est fixé au plancher de la cabine.

Selon une caractéristique, le panneau séparateur et ledit au moins un siège passager dudit au moins un sous-ensemble d'aéronef sont mécaniquement indépendants l'un de l'autre.

Ceci permet d'associer facilement au moins un panneau à un ou plusieurs sièges ou assises pour passagers sans toutefois remettre en question la conception du ou des sièges/assises.

L'installation d'un panneau à côté d'un siège passager est ainsi aisée, de même que son démontage.

Le sous-ensemble ne constituant pas un monobloc, ses éléments peuvent être introduits dans l'aéronef l'un après l'autre, ce qui facilite les opérations de manutention et d'installation.

Selon une caractéristique, la hauteur du panneau séparateur est inférieure à la hauteur de la cabine d'aéronef et est suffisante pour dissimuler, derrière le panneau, au moins en partie, un passager occupant ledit au moins un siège vis-à-vis d'un autre passager assis.

Par contre, la hauteur du panneau est limitée tant pour ventiler la cabine que pour laisser l'espace de la cabine le plus ouvert possible, et éviter ainsi une sensation de confinement.

Selon une caractéristique, l'aéronef comporte plusieurs sous-ensembles d'aéronef agencés sur le plancher de la cabine.

Selon une caractéristique, chacun des sièges passagers des sous-ensembles est disposé le long d'une allée de la cabine et chacun des panneaux séparateurs est placé entre l'allée correspondante et le siège.

Selon une caractéristique, les sous-ensembles d'aéronef disposés de part et d'autre d'une allée sont agencés en quinconce.

On renforce ainsi l'intimité des passagers en décalant les sous-ensembles les uns par rapport aux autres le long d'une allée.

Selon une caractéristique, chacun des panneaux séparateurs des sous-ensembles d'aéronef ayant une grande face convexe, les faces convexes des panneaux séparateurs disposés de part et d'autre d'une allée sont orientées vers l'allée.

D'autres caractéristiques et avantages apparaîtront au cours de la description qui va suivre, donnée à titre d'exemple non limitatif et faite en référence aux dessins annexés, sur lesquels :
- la figure 1 est une représentation schématique générale d'une cabine d'un aéronef dans laquelle sont implantés des sous-ensembles selon l'invention ;
- la figure 2 est une vue schématique générale analogue à celle de la figure 1 et montrant uniquement l'implantation d'une partie des sous-ensembles représentés à la figure 1 ;
- la figure 3 illustre en vue de face une partie d'un sous-ensemble telle que représentée à la figure 2 ;
- la figure 4 illustre une vue de côté de la partie du sous-ensemble représentée à la figure 3 ;
- la figure 5 est une vue générale montrant un passager installé dans un sous-ensemble selon l'invention ;
- la figure 6 est une vue de dessus de la figure 5 ;
- la figure 7 est une vue générale montrant l'intérieur d'un autre sous-ensemble dans lequel un passager est installé en position couchée ;
- la figure 8 est une vue schématique générale en perspective, montrant, pour deux sous-ensembles, la fixation d'une partie de chaque sous-ensemble sur le plancher de la cabine de l'aéronef ;
- la figure 9 est une vue schématique générale de dessus montrant les parties de sous-ensemble représentées à la figure 8, en association avec des sièges ou assises pour passager ;
- la figure 10 est une vue schématique générale en perspective des sous-ensembles représentés à la figure 9 ;
- la figure 11 est une vue en perspective montrant des sous-ensembles d'aéronef selon l'invention agencés dans une cabine d'aéronef.

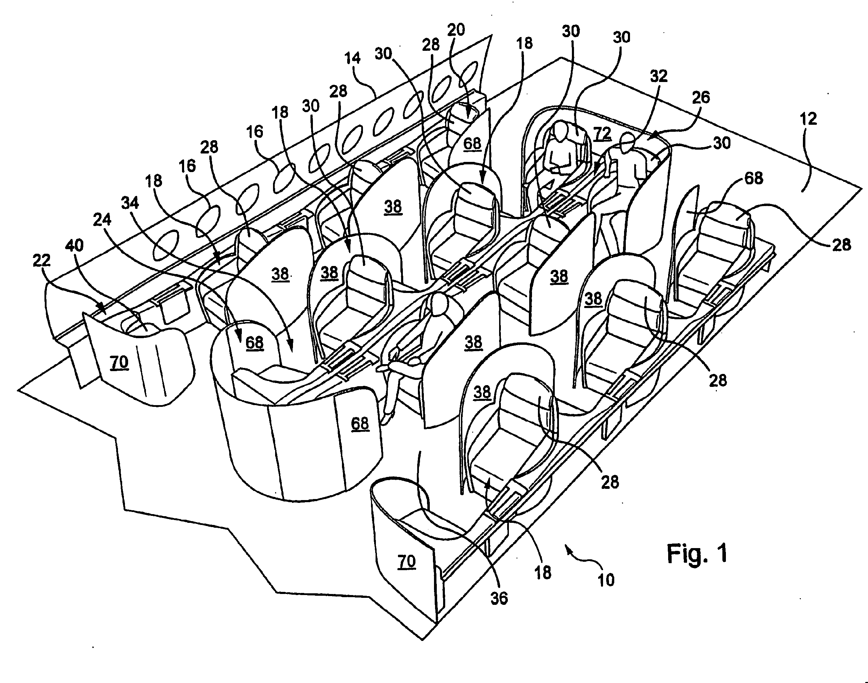

Comme représentée partiellement sur la figure 1 et désignée par la référence générale notée 10, une cabine d'aéronef comporte un plancher 12, des parois latérales dont une seule 14 pourvue de hublots 16 est représentée, ainsi qu'un plafond non représenté sur cette figure par souci de clarté.

Sur cette figure, différents aménagements cabine ont été représentés et notamment des sous-ensembles d'aéronefs selon l'invention qui comportent des sièges ou assises pour passagers, ainsi qu'un ou plusieurs panneaux séparateurs.

Sur cette figure, plusieurs types différents de sous-ensembles d'aéronef selon l'invention sont représentés et déclinent ainsi plusieurs possibilités de mise en oeuvre de l'invention.

Les différents type de sous-ensembles sont repérés par les références générales notées 18, 20, 22, 24 et 26.

Dans cette cabine, différents sièges et assises pour passagers sont implantés, à savoir des sièges 28 disposés le long des parois 14 de la cabine. Dans la partie centrale de celle-ci, des sièges 30 sont implantés par paire, deux sièges 30 d'une même paire étant séparés l'un de l'autre par un compartiment central 32 longitudinal qui s'étend entre plusieurs paires de sièges et qui sert par exemple à ranger les bagages des passagers.

Ces sièges 30 sont plus particulièrement utilisés par les passagers voyageant en couple et les sièges 28 par des personnes seules.

On notera que les sièges 28 et les sièges 30 sont placés de part et d'autre d'une allée ayant une direction longitudinale, deux allées 34 et 36 étant prévues dans la cabine pour la circulation des passagers et du personnel de bord.

On notera que les agencements ou sous-ensembles d'aéronef selon l'invention sont disposés en quinconce, les uns par rapport aux autres, de part et d'autre de chaque allée, afin d'augmenter l'effet de masquage produit par les panneaux séparateurs de ces sous-ensembles.

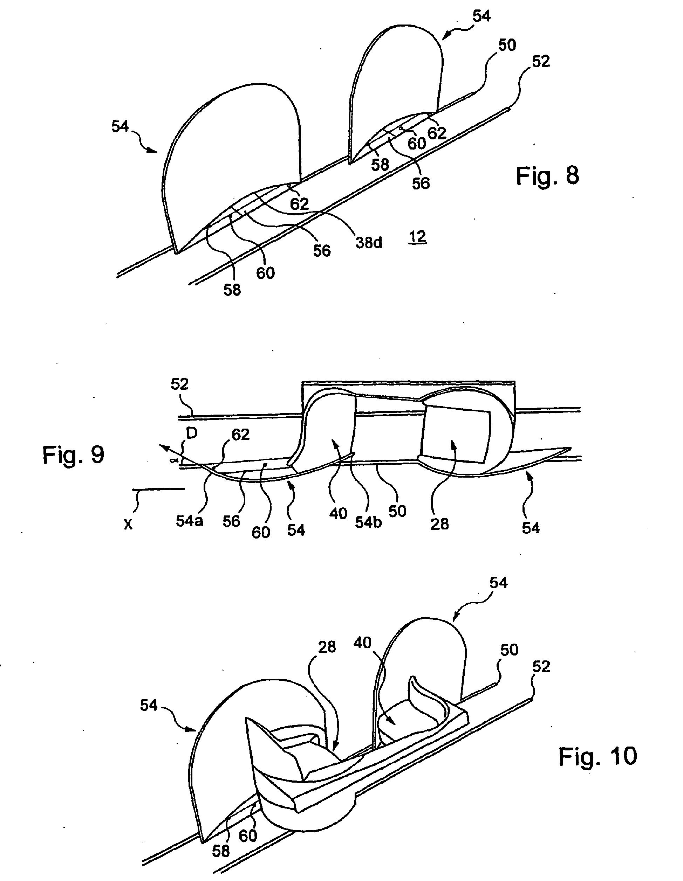

On notera que chacun des sous-ensembles d'aéronef selon l'invention est agencé sur le plancher 12 de la cabine comme il sera décrit ultérieurement en référence aux figures 8 et 9.

Chaque sous-ensemble d'aéronef selon invention comporte un siège ou une assise, voire un siège et une assise ou même deux sièges, ainsi qu'un ou plusieurs panneaux séparateurs non transparents dont les dimensions sont telles qu'elles permettent de dissimuler derrière eux, totalement ou partiellement, un passager occupant le siège ou l'assise concerné.

Cet effet qui favorise une plus grande intimité pour les passagers occupant de tels sous-ensembles, est obtenu par la présence du ou des panneaux, leur positionnement par rapport au siège et/ou à l'assise et leurs dimensions.

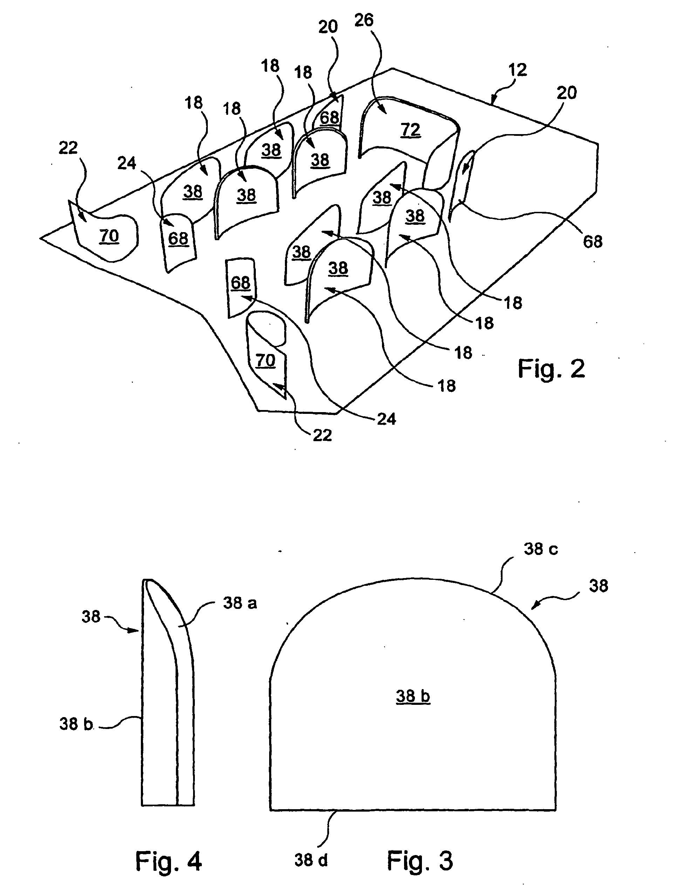

On a représenté sur la figure 2 le plancher 12 de la cabine de l'aéronef, en enlevant tous les équipements ou aménagements autres que les panneaux séparateurs des sous-ensembles d'aéronefs selon l'invention.

On discerne ainsi sur cette figure l'implantation des panneaux des différents types de sous-ensembles d'aéronef 18, 20, 22, 24 et 26.

Une telle représentation permet de constater que la présence des panneaux ne surcharge pas l'aménagement de la cabine, n'obstrue pas les allées de celle-ci et donc n'entrave pas le déplacement des passagers et du personnel de bord.

Par ailleurs, et comme on peut le constater sur la figure 1, la disposition des panneaux ne réduit pas l'espace libre autour des sièges ou assises pour passagers et, notamment, ne restreint pas l'accès des passagers à ces sièges ou assises.

On a représenté sur les figures 3 et 4 deux panneaux séparateurs 38 du sous-ensemble d'aéronef 18, représentés aux figures 1 et 2.

Le panneau 38 est représenté en vue de face sur la figure 3 tel que le verrait un observateur qui serait assis dans l'allée, dissimulant ainsi, aux yeux de cet observateur, le siège et/ou l'assise placé derrière le panneau, ou du moins le dossier et la partie de celui-ci occupée par le buste du passager.

On notera que ce panneau est interposé entre l'allée, le long de laquelle le sous-ensemble concerné est agencé, et le siège et/ou l'assise pour passager qui fait partie du sous-ensemble.

Comme représenté sur les figures 3 et 4 qui illustrent le panneau 38 dans une position verticale, ce dernier présente, perpendiculairement à sa hauteur, une courbure transversale qui lui confère, ici, une forme générale de tuile.

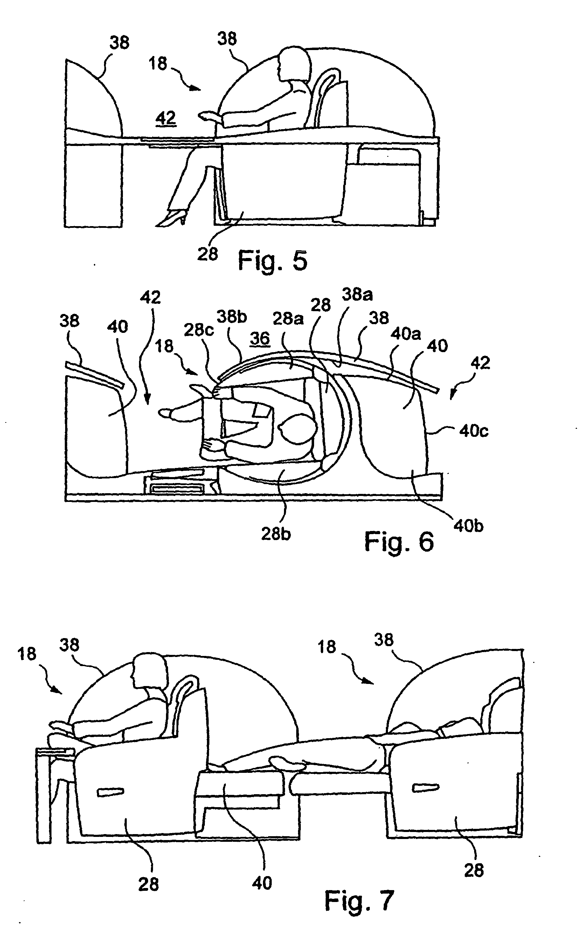

La courbure transversale du panneau est au moins présente dans la partie du panneau longeant le siège, c'est-à-dire le long d'un des deux côtés opposés du siège, côtés où sont situés les accoudoirs. Cette courbure commence à l'extrémité avant du panneau qui est située au niveau de l'avant du siège et s'étend au moins jusqu'au niveau du dossier du siège (panneau 68 le long du siège 28 sur la figure 1), voire plus loin vers l'arrière pour border une assise 40 par exemple (figure 6).

Cette courbure s'étend en outre sur la majeure partie de la hauteur du panneau, voire la totalité de celle-ci.

On notera que d'autres formes de panneaux bombés ou courbés peuvent également être adoptées dans la mesure où leurs dimensions assurent, au moins en partie, le masquage du siège et du passager.

Le panneau incurvé comporte ainsi deux grandes faces opposées, une face interne concave 38a et une face opposée externe convexe 38b.

Lorsqu'un tel panneau est agencé contre un siège et/ou une assise de passager (figures 1 et 6), la face interne concave 38a est orientée vers le siège et/ou l'assise, ce qui cache d'avantage le passager placé dans le siège et/ou l'assise que si la face convexe du panneau était tournée vers lui.

En outre, comme représenté sur les figures 1 et 2, les grandes faces convexes 38b des panneaux séparateurs sont orientées vers l'allée 34 ou 36 selon le cas.

Cet agencement favorise le déplacement des passagers et du personnel de cabine puisqu'en circulant dans les allées, ces derniers ne peuvent entrer en contact qu'avec des surfaces convexes bombées et lisses, ce qui limite les risques de blessures.

En effet, en l'absence de ces panneaux, les personnes circulant dans les allées peuvent heurter les sièges de passagers, notamment les accoudoirs.

On notera en outre que le panneau séparateur 38 présente, à sa partie supérieure, en projection dans un plan vertical, tel que celui de la figure 3, une courbure convexe réalisée par exemple sous la forme d'un bord arrondi supérieur 38c.

Cette courbure peut être qualifiée de courbure verticale.

La partie opposée inférieure 38d du panneau est, quant à elle, réalisée sous la forme d'un bord rectiligne qui est destiné à être fixé sur le plancher 12 de la cabine de l'aéronef.

Les figures 5 à 7 illustrent l'utilisation du sous-ensemble d'aéronef 18 par des passagers en position assise et couchée.

Le panneau séparateur 38 du sous-ensemble 18 est agencé contre un siège passager 28 et une assise 40.

Cette assise est disposée de façon alignée avec le siège suivant la direction longitudinale de l'allée 36 le long de laquelle le sous-ensemble 18 est positionné.

Ainsi que représenté sur les figures 5 à 7, le panneau séparateur 38 s'étend longitudinalement le long d'un des deux cotés opposés 28a et 28b du siège passager 28 et cette extension est prolongée le long d'un des deux côtés opposés 40a, 40b de l'assise passager 40.

Comme représenté sur la figure 6, le panneau peut même s'étendre un peu au-delà de l'extrémité avant 40a de l'assise 40, mais généralement la longueur ou dimension longitudinale du panneau est sensiblement égale à celle du siège et/ou de l'assise à masquer.

Le panneau 38 vient ainsi couvrir uniquement l'un des deux côtés de l'ensemble siège 28 et assise 40 (côté 28a du siège et côté 40a de l'assise), afin de ne pas empiéter sur l'espace libre situé autour du siège et de l'assise passager et, notamment sur l'espace libre avant 42 situé devant chaque siège et devant chaque assise (figures 5 et 6).

Le passager assis est donc libre de ses mouvements tout en étant à l'abri des regards indiscrets.

De plus, ses mouvements ne sont pas entravés, lorsqu'il souhaite, par exemple, déployer ses jambes ou quitter ou rejoindre son siège ou son assise.

En effet, aucune cloison n'est prévue entre deux panneaux 38 successifs pour fermer l'espace régnant entre ces derniers et le panneau 38 adjacent au siège 28 ne s'étend pas au-delà de l'extrémité avant 28c du siège (figure 6).

En d'autres termes, le panneau séparateur est positionné à un endroit qui, de toute façon, ne gêne personne et notamment pas le passager assis.

On notera également que la courbure du panneau suit la courbure des côtés du siège et de l'assise (figure 6). Ainsi, il n'y a pas de place perdue entre le panneau et le siège et l'assise, l'espace disponible dans la cabine est donc optimisé.

De plus, des courbures similaires, voire identiques entre le panneau et le siège et l'assise rendent le sous-ensemble plus compact, plus homogène.

Les passagers, tels que représentés sur les figures 5 et 7 sont ainsi dissimulés en partie derrière les panneaux 38, que ce soit, en position assise (figure 5 et partie gauche de la figure 7) ou en position allongée lorsque le siège 28 est transformé en lit avec l'aide de l'assise 40 (partie droite de la figure 7).

On notera également que l'assise 40 peut être occupée par un autre passager venant s'asseoir en regard du passager assis dans le siège 28, en profitant ainsi d'une certaine intimité assurée par la présence des panneaux 38.

Comme rappelé plus haut, les dimensions longitudinales du panneau sont suffisantes pour couvrir latéralement un siège et une assise sans restreindre l'accès à ces derniers, ni gêner les mouvements des passagers. Le panneau est en outre placé suffisamment près du siège ou de l'assise et suffisamment mince pour ne pas empiéter de façon exagérée sur l'espace libre de l'allée dans laquelle circulent des personnes et des chariots poussés par le personnel de bord.

Par ailleurs, le panneau 38 s'étend également le long d'une direction verticale, sur une hauteur permettant de cacher au moins en partie un passager assis sur le siège 28 ou l'assise 40, à l'exception toutefois de la partie supérieure de la tête des passagers les plus grands.

De façon générale, la hauteur du panneau doit être supérieure à celle du siège ou de l'assise et être suffisante pour dissimuler un passager occupant le siège ou l'assise vis-à-vis d'autres passagers assis à d'autres endroits de la cabine et, notamment, des passagers assis de l'autre côté de l'allée.

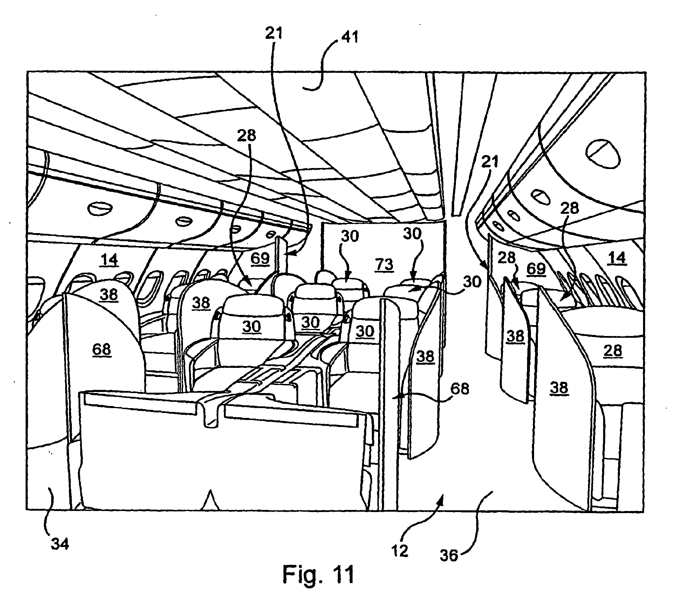

La hauteur du panneau doit également être inférieure à la hauteur du plafond de la cabine de l'aéronef (voir la hauteur des panneaux 38 par rapport au plafond 41 sur la figure 11) afin d'éviter de perturber l'écoulement d'air provenant du système de ventilation de la cabine.

Une hauteur de 1,30 mètre constitue un exemple non limitatif de hauteur de panneau qui respecte ces exigences.

On notera en outre que le panneau est mécaniquement indépendant du siège et/ou de l'assise.

De cette façon, un panneau peut être ajouté à côté d'un siège préalablement installé dans une cabine d'aéronef, même si l'agencement initial de la cabine ne le prévoyait pas.

Par ailleurs, lier mécaniquement le panneau au siège et/ou à l'assise, nécessiterait de revoir la conception du siège et/ou de l'assise, et également d'obtenir une nouvelle certification 16G pour le sous-ensemble d'aéronef ainsi obtenu.

On a représenté sur les figures 8 et 9 la fixation, sur le plancher 12 de la cabine d'aéronef, des panneaux séparateurs et, plus généralement, des sous-ensembles d'aéronefs selon l'invention.

Sur la figure 8 deux rails longitudinaux 50, 52 qui sont normalement destinés à la fixation des sièges passagers et autres équipements sur le plancher de la cabine, sont représentés.

Sur cette figure, les panneaux séparateurs 54 des sous-ensembles d'aéronef selon l'invention ont été légèrement modifiés par rapport aux panneaux 38 des figures précédentes par l'adjonction à leur partie inférieure d'un socle 56 facilitant l'installation desdits panneaux.

Le socle 56 s'étend à partir du bord arrondi inférieur 38d du panneau perpendiculairement à la hauteur dudit panneau.

En projection dans un plan perpendiculaire à la hauteur du panneau (plan horizontal de la figure 9), le socle 56 ferme l'espace concave délimité par le panneau courbe 54.

La présence de ce socle ou embase renforce la rigidité du panneau 54 et sa stabilité verticale.

Par ailleurs, la présence de ce socle facilite le montage du panneau sur le rail 50.

En effet, avec un tel socle, il suffit de prévoir des organes de fixation tels que des vis qui traversent l'épaisseur du socle pour venir se fixer à l'intérieur du rail 50.

De tels moyens de fixation 58, 60, 62 sont représentés sur les figures 8 à 10.

Le siège 28 et l'assise 40 sont, pour leur part, fixés de façon conventionnelle sur l'autre rail 52, comme représenté sur les figures 9 et 10.

Sur la figure 9, on a représenté par la référence notée D, l'orientation d'un vecteur tangent à la face externe du panneau séparateur courbe 54.

Les orientations successives prises par ce vecteur, en suivant la face externe du panneau, définissent la convexité de cette dernière qui s'étend de l'extrémité avant 54a du panneau à l'extrémité arrière 54b du panneau.

La direction prise par ce vecteur à l'extrémité avant 54a du panneau, là où le vecteur est matérialisé, forme un angle a environ égal à +25° par rapport à la direction longitudinale X de l'avion (direction longitudinale des rails et des allées de la cabine).

Cet angle ne doit pas adopter de valeurs trop élevées dépassant trop largement celles de la courbure du siège, car les deux courbures (siège et panneau) seraient alors trop différentes l'une de l'autre.

De plus, l'extrémité avant 54a ne doit pas revenir devant le siège et ainsi restreindre l'espace avant du passager.

Une valeur de l'angle a trop élevée par rapport à +25° risquerait de fermer cet espace.

Lorsque le vecteur tangent parcourt la face externe convexe, depuis l'extrémité arrière 54b du panneau jusqu'à l'extrémité avant 54a, l'angle a varie entre environ -10° et +25° par rapport à la direction X.

On notera que les sièges utilisés dans les classes dites supérieures, tels que les sièges passager 28, sont pourvus d'un certain nombre d'équipements qui complexifient la structure des sièges et nécessitent notamment d'avoir recours à des moteurs.

Ainsi, les structures internes de ces sièges sont généralement protégées par des habillages externes afin de dissimuler de l'extérieur les mécanismes et circuits électriques internes.

En agençant, dans un sous-ensemble d'aéronef selon l'invention, un panneau séparateur sur le côté du siège passager, on peut ainsi masquer certains éléments internes au siège sans avoir recours à un habillage spécifique, ce qui s'avère particulièrement avantageux.

Comme représenté sur les figures 1 et 2, un deuxième type de sous-ensemble ou d'équipement d'aéronef selon l'invention est représenté sous la forme de l'unité 20.

Ce sous-ensemble comporte un siège passager 28 ainsi qu'un panneau séparateur 68 qui s'étend latéralement par rapport au siège, le long d'un des deux côtés opposés de celui-ci suivant une direction longitudinale et une direction verticale.

Les dimensions longitudinale et verticale du panneau sont suffisantes pour dissimuler le passager assis sur le siège 28 aux yeux des autres passagers assis dans d'autres sièges de la cabine.

Bien entendu, tout comme pour les autres sous-ensembles d'aéronef selon l'invention, la hauteur du panneau est supérieure à celle des sièges afin d'assurer une protection de l'intimité du passager, et donc de lui réserver un espace privé.

Ce sous-ensemble ne comporte toutefois pas d'assise placée derrière le siège du passager et le panneau 68 est donc de dimension longitudinale inférieure à celle du panneau 38.

La forme du panneau 68 est également incurvée et le panneau présente ainsi, en vue de dessus (en projection dans un plan perpendiculaire à sa hauteur), un profil semi-circulaire.

La dimension longitudinale du panneau 68 du sous-ensemble 20 correspond par exemple à la moitié de celle d'un panneau séparateur 38.

Selon une variante représentée à la figure 11, le sous-ensemble 21 comporte un panneau séparateur 69 qui s'étend le long d'un côté du siège 28 et forme un retour derrière ce siège, sensiblement perpendiculairement à la direction longitudinale d'extension le long de l'allée 34 ou 36.

Dans cette variante, la hauteur du panneau est supérieure à celle des panneaux 68 et 38 placés à l'avant de la cabine.

Un autre type de sous-ensemble d'aéronef 24 comprend une assise 40 et un panneau séparateur identique au panneau séparateur 68 précité.

Comme représenté sur la figure 1, les deux panneaux séparateurs 68 du sous-ensemble 24 sont associés à d'autres cloisons disposées de façon sensiblement arrondie pour relier ledit panneau 68.

Le sous-ensemble d'aéronef 22 représente également un autre type de sous-ensemble associant une assise 40 pour passager et un panneau séparateur 70 qui s'étend longitudinalement le long d'un des côtés de l'assise passager, parallèlement à l'allée, puis se prolonge sensiblement perpendiculairement à cette direction, derrière l'assise, en formant un retour.

La hauteur du panneau séparateur 70 est identique à la hauteur des panneaux des autres sous-ensembles mais il est toutefois possible que les panneaux des différents sous-ensembles présentent des hauteurs différentes l'une par rapport à l'autre.

Cela permet une meilleure circulation de l'air provenant du système de climatisation ainsi qu'un dégagement visuel pour la sécurité.

Ainsi, par exemple, le panneau 70 peut présenter une hauteur inférieure à celle des autres panneaux.

On notera que des tailles différentes de panneaux peuvent modifier la perception de l'espace par les passagers. Il est ainsi possible d'augmenter la hauteur des panneaux de l'avant vers l'arrière de la cabine pour restituer une impression de grand espace.

L'intérieur de la cabine représenté sur la figure 11 illustre cet aspect avec les panneaux 69 et 73 situés au fond de la cabine et qui ont une hauteur supérieure à celle des panneaux 38 et 68 situés au premier plan.

Sur la figure 1, un autre type de sous-ensemble d'aéronef selon l'invention est représenté et identifié par la référence générale 26.

Ce sous-ensemble comporte deux sièges passagers, notés 30, disposés parallèlement l'un à l'autre et séparés par le compartiment central 32.

Les passagers occupant ces sièges disposés côte à côte, mais néanmoins éloignés latéralement l'un de l'autre, sont généralement occupés par des couples, et de façon générale par des personnes voyageant ensemble.

Dans ce contexte, le sous-ensemble d'aéronef 26 comporte un panneau séparateur protégeant ces personnes des regards indiscrets vis-à-vis de l'extérieur du sous-ensemble.

Ainsi, le panneau séparateur 72 du sous-ensemble s'étend depuis l'un des deux côtés opposés du premier siège 30, à savoir le côté jouxtant l'allée 34, jusqu'à l'un des deux côtés opposés du second siège 30, à savoir le côté jouxtant l'allée 3 par l'intermédiaire d'un retour qui passe derrière les deux sièges.

Un tel panneau forme en quelque sorte une alcôve ouverte sur le devant des sièges 30 en entourant partiellement ces derniers.

Dans cette configuration, la courbure de chaque partie latérale du panneau 72 s'étend depuis un plan perpendiculaire à la direction longitudinale des rails, où le vecteur tangent à la face externe du panneau, forme avec cette dernière un angle nul (derrière un siège 30), jusqu'à l'extrémité avant du panneau (en longeant un côté du siège 30), où le vecteur tangent à la face externe du panneau forme avec cette dernière un angle sensiblement égal à 115° par rapport au plan précité.

Au-delà de cet angle, le panneau fermerait l'espace avant du passager.

Par mesure d'économie et d'optimisation, le sous-ensemble peut être composé de deux pièces du type du panneau 68 connectées avec un panneau droit.

Toutefois, il est également envisageable que le sous-ensemble 26 soit uniquement constitué de deux panneaux de type 68, chacun associé latéralement avec l'un des deux sièges 30.

Comme représenté sur la figure 11, selon une variante, le panneau séparateur 72 du sous-ensemble 26 des figures 1 et 2 s'étend verticalement bien au dessus des sièges 30 dans sa partie située derrière les sièges pour former le panneau 73.

Par contre, sur les côtés de ces sièges, la hauteur du panneau 73 ne dépasse pas celle du panneau 72.

On notera que dans tout ce qui précède, il était question pour chaque type de sous-ensemble d'aéronef selon l'invention, d'un seul panneau séparateur mais pour diverses raisons, ce panneau peut être constitué de plusieurs panneaux sans que cela n'affecte le principe de l'invention.

En outre, les panneaux des sous-ensembles d'aéronef selon l'invention constituent en quelque sorte des paravents derrières lesquels sont dissimulés au moins en partie des passagers assis.

## Revendications

1. Sous-ensemble d'aéronef comportant au moins un siège (28, 30) et une assise (40) pour passager, un panneau séparateur (38) qui s'étend le long d'un des deux côtés opposés dudit au moins un siège, suivant une dimension longitudinale au moins égale à celle dudit au moins un siège (28, 30) et suivant une dimension verticale ou hauteur supérieure à celle dudit au moins un siège (28, 30), de manière à dissimuler, au moins en partie, derrière le panneau (38), un passager occupant ledit au moins un siège (28, 30), **caractérisé en ce que** le panneau separateur (38) présente, perpendiculairement à sa hauteur au moins le long d'un des deux côtés opposés dudit au moins un siège (28, 30), une courbure dite transversale qui a une concavité dirigée vers ledit au moins un siège (28, 30).

2. Sous-ensemble d'aéronef selon la revendication 1, **caractérisé en ce que** la courbure transversale s'étend suivant toute la hauteur du panneau.

3. Sous-ensemble d'aéronef selon la revendication 1 ou 2, **caractérisé en ce que** le panneau a une partie convexe tournée vers l'extérieur du sous-ensemble.

4. Sous-ensemble d'aéronef selon l'une des revendications 1 à 3, **caractérisé en ce que** le panneau séparateur comporte, à sa partie inférieure, un socle (56) destiné à être fixé au plancher d'une cabine d'aéronef.

5. Sous-ensemble d'aéronef selon l'une des revendications 1 à 4, **caractérisé en ce que** le panneau séparateur présente, à sa partie supérieure, une courbure convexe, en projection dans un plan contenant les directions longitudinale et verticale d'extension du panneau.

6. Sous-ensemble d'aéronef selon l'une des revendications 1 à 5, **caractérisé en ce qu'**il comporte en outre une assise (40) disposée derrière le siège du passager, alignée suivant la direction longitudinale d'extension du panneau séparateur, ledit panneau séparateur s'étendant également suivant cette direction, le long d'un des deux côtés de l'assise.

7. Sous-ensemble d'aéronef selon l'une des revendications 1 à 6, **caractérisé en ce que** le panneau séparateur forme un retour derrière le siège passager ou l'assise dans une direction sensiblement perpendiculaire à la direction longitudinale.

8. Sous-ensemble d'aéronef selon l'une des revendications 1 à 5, **caractérisé en ce qu'**il comporte deux sièges de passager disposés parallèlement l'un à l'autre, le panneau séparateur s'étendant depuis l'un des deux côtés opposés du premier siège jusqu'à l'un des deux côtés opposés du second siège en passant derrière les deux sièges, de manière à former une sorte d'alcôve ouverte sur le devant des dits sièges.

9. Aéronef comportant au moins un sous-ensemble d'aéronef agencé sur un plancher d'une cabine de aéronef, **caractérisé en ce que** ledit au moins un sous-ensemble est conforme à l'une des revendications 1 à 8.

10. Aéronef selon la revendication 9, **caractérisé en ce que** le panneau séparateur et ledit au moins un siège passager dudit au moins un sous-ensemble d'aéronef sont mécaniquement indépendants l'un de l'autre.

11. Aéronef selon l'une des revendications 9 à 10, **caractérisé en ce que** la hauteur du panneau séparateur est inférieure à la hauteur de la cabine d'aéronef et est suffisante pour dissimuler, derrière le panneau, au moins en partie, un passager occupant ledit au moins un siège vis-à-vis d'un autre passager assis.

12. Aéronef selon l'une des revendications 9 à 11, **caractérisé en ce qu'**il comporte plusieurs sous-ensembles d'aéronef agencés sur le plancher de la cabine.

13. Aéronef selon la revendication 12, **caractérisé en ce que** chacun des sièges passagers des sous-ensembles est disposé le long d'une allée de la cabine et chacun des panneaux séparateurs est placé entre l'allée correspondante et le siège.

14. Aéronef selon la revendication 13, **caractérisé en ce que** les sous-ensembles d'aéronef disposés de part et d'autre d'une allée sont agencés en quinconce.

15. Aéronef selon la revendication 13 ou 14, **caractérisé en ce que** chacun des panneaux séparateurs des sous-ensembles d'aéronef ayant une grande face convexe, les faces convexes des panneaux séparateurs disposés de part et d'autre d'une allée sont orientées vers l'allée.

## Claims

1. Aircraft subassembly comprising at least one seat (28, 30) and a seat-rest (40) for a passenger, a separating panel (38) that extends along one of the two opposite sides of the said at least one seat, with a longitudinal dimension at least equal to that of the said at least one seat (28, 30) and with a vertical dimension or height greater than that of the said at least one seat (28, 30), so as to conceal, at least partially, behind the panel (38), a passenger occupying the said at least one seat (28, 30), **characterized in that** the separating panel has, perpendicular to its height, at least along one of the two opposite sides of the said at least one seat (28, 30), a so-called transverse curvature which has a concavity directed towards said at least one seat (28, 30).

2. Aircraft subassembly according to claim 1, **characterized in that** the transverse curvature extends along the entire height of the panel.

3. Aircraft subassembly according to claim 1 or 2, **characterized in that** the panel has a convex portion turned outwardly of the subassembly.

4. Aircraft subassembly according to one of claims 1 to 3, **characterized in that** the separating panel comprises, at its lower portion, a base (56) intended to be fastened to the floor of an aircraft cabin.

5. Aircraft subassembly according to one of claims 1 to 4, **characterized in that** the separating panel has, at its upper portion, a convex curvature, projecting in a plane containing the longitudinal and vertical directions of extension of the panel.

6. Aircraft subassembly according to one of claims 1 to 5, **characterized in that** it furthermore comprises a seat-rest (40) disposed behind the seat for the passenger, aligned with the longitudinal direction of extension of the separating panel, the said separating panel also extending in this direction, along one of the two sides of the seat-rest.

7. Aircraft subassembly according to one of claims 1 to 6, **characterized in that** the separating panel forms a portion turned behind the passenger seat or the seat-rest in a direction substantially perpendicular to the longitudinal direction.

8. Aircraft subassembly according to one of claims 1 to 5, **characterized in that** it comprises two passenger seats disposed parallel to one another, the separating panel extending from one of the two opposite sides of the first seat to one of the two opposite sides of the second seat, passing behind the two seats, so as to form a kind of alcove open at the front of the said seats.

9. Aircraft comprising at least one aircraft subassembly arranged on a floor of a cabin of the aircraft, **characterized in that** the said at least one subassembly is in accordance with one of claims 1 to 8.

10. Aircraft according to claim 9, **characterized in that** the separating panel and the said at least one passenger seat of the said at least one aircraft subassembly are mechanically independent of one another.

11. Aircraft according to one of claims 9 to 10, **characterized in that** the height of the separating panel is less than the height of the aircraft cabin and is sufficient to conceal, behind the panel, at least partially, a passenger occupying the said at least one seat with regard to another seated passenger.

12. Aircraft according to one of claims 9 to 11, **characterized in that** it comprises several aircraft subassemblies arranged on the floor of the cabin.

13. Aircraft according to claim 12, **characterized in that** each of the passenger seats of the subassemblies is disposed along an aisle of the cabin and each of the separating panels is positioned between the corresponding aisle and the seat.

14. Aircraft according to claim 13, **characterized in that** the aircraft subassemblies disposed on both sides of an aisle are in staggered arrangement.

15. Aircraft according to claim 13 or 14, **characterized in that**, each of the separating panels of the aircraft subassemblies having a large convex face, the convex faces of the separating panels disposed on both sides of an aisle are oriented toward the aisle.

## Patentansprüche

1. Flugzeug-Untereinheit, umfassend mindestens einen Sitz (28,30) und eine Sitzfläche (40) für einen Fluggast, eine Trennplatte (38), die sich längs einer der beiden entgegengesetzten Seiten dieses mindestens einen Sitzes gemäß einer Längsabmessung erstreckt, die mindestens gleich derjenigen des mindestens einen Sitzes (28, 30) ist, und gemäß einer vertikalen Abmessung oder Höhe, die größer als diejenige des mindestens einen Sitzes (28, 30) ist, so dass hinter der Platte (38) ein Fluggast, der diesen mindestens einen Sitz (28, 30) einnimmt, mindestens zum Teil verborgen ist, **dadurch gekennzeichnet, dass** die Trennplatte (38) senkrecht zu ihrer Höhe mindestens längs einer der beiden entgegengesetzten Seiten des mindestens einen Sitzes (28, 30) eine sogenannte Querkrümmung aufweist, die eine auf den mindestens einen Sitz (28, 30) zu gerichtete Konkavität aufweist.

2. Flugzeug-Untereinheit nach Anspruch 1, **dadurch gekennzeichnet, dass** die Querkrümmung sich über die ganze Höhe der Platte erstreckt.

3. Flugzeug-Untereinheit nach Anspruch 1 oder 2, **dadurch gekennzeichnet, dass** die Platte einen bezüglich der Untereinheit nach außen gewandten konvexen Teil aufweist.

4. Flugzeug-Untereinheit nach einem der Ansprüche 1 bis 3, **dadurch gekennzeichnet, dass** die Trennplatte in ihrem unteren Teil einen Sockel (56) aufweist, der dazu bestimmt ist, an dem Boden einer Flugzeugkabine befestigt zu werden.

5. Flugzeug-Untereinheit nach einem der Ansprüche 1 bis 4, **dadurch gekennzeichnet, dass** die Trennplatte in ihrem oberen Teil in einer Projektion auf eine Ebene, die die Längsrichtung und die vertikale Richtung der Erstreckung der Platte enthält, eine konvexe Krümmung aufweist.

6. Flugzeug-Untereinheit nach einem der Ansprüche 1 bis 5, **dadurch gekennzeichnet, dass** sie außerdem eine hinter dem Sitz des Fluggasts angeordnete Sitzfläche (40) umfasst, die in der Längserstrekkungsrichtung der Trennplatte in einer Reihe liegt, wobei die Trennplatte sich auch längs einer der beiden Seiten der Sitzfläche in dieser Richtung erstreckt.

7. Flugzeug-Untereinheit nach einem der Ansprüche 1 bis 6, **dadurch gekennzeichnet, dass** die Trennplatte hinter dem Fluggastsitz oder der Sitzfläche eine Abwinklung in einer zur Längsrichtung im Wesentlichen senkrechten Richtung bildet.

8. Flugzeug-Untereinheit nach einem der Ansprüche 1 bis 5, **dadurch gekennzeichnet, dass** sie zwei parallel zueinander angeordnete Fluggastsitze umfasst, wobei die Trennplatte sich von einer der beiden entgegengesetzten Seiten des ersten Sitzes bis zu einer der beiden entgegengesetzten Seiten des zweiten Sitzes erstreckt, wobei sie hinter den beiden Sitzen verläuft, so dass eine Art bezüglich der Sitze nach vorne offener Alkoven gebildet wird.

9. Flugzeug, umfassend mindestens eine Flugzeug-Untereinheit, die auf einem Boden einer Kabine des Flugzeugs angeordnet ist, **dadurch gekennzeichnet, dass** die mindestens eine Untereinheit gemäß einem der Ansprüche 1 bis 8 ist.

10. Flugzeug nach Anspruch 9, **dadurch gekennzeichnet, dass** die Trennplatte und der mindestens eine Fluggastsitz der mindestens einen Flugzeug-Untereinheit mechanisch voneinander unabhängig sind.

11. Flugzeug nach einem der Ansprüche 9 bis 10, **dadurch gekennzeichnet, dass** die Höhe der Trennplatte kleiner als die Höhe der Flugzeugkabine ist und ausreicht, um hinter der Platte einen diesen mindestens einen Sitz einnehmenden Fluggast für einen anderen sitzenden Fluggast mindestens zum Teil zu verbergen.

12. Flugzeug nach einem der Ansprüche 9 bis 11, **dadurch gekennzeichnet, dass** es mehrere auf dem Boden der Kabine angeordnete Flugzeug-Untereinheiten umfasst.

13. Flugzeug nach Anspruch 12, **dadurch gekennzeichnet, dass** jeder der Fluggastsitze der Untereinheiten längs eines Gangs der Kabine angeordnet ist und jede der Trennplatten zwischen dem entsprechenden Gang und dem Sitz angeordnet ist.

14. Flugzeug nach Anspruch 13, **dadurch gekennzeichnet, dass** die zu beiden Seiten eines Gangs angeordneten Flugzeug-Untereinheiten versetzt angeordnet sind.

15. Flugzeug nach Anspruch 13 oder 14, **dadurch gekennzeichnet, dass**, wenn jede der Trennplatten der Flugzeug-Untereinheiten eine konvexe große Seite hat, die konvexen Seiten der zu beiden Seiten eines Gangs angeordneten Trennplatte dem Gang zugewandt sind.
